# EUROPEAN PATENT APPLICATION

(11) **EP 1 679 188 A2**
(43) Date of publication of application: **12.07.2006**
(21) Application number: 05108853.2
(22) Date of filing: 26.09.2005
(51) Int. Cl.: B41F 21/08, B65G 23/44, B65H 5/08

(54) **Device for control of the tension of a sheet conveyor device of a press for laminar material**

(30) Priority: 05.01.2005 ES 200500019 U
(71) Applicant: Ibérica A.G., S.A., 08820 El Prat del Llobregat (ES)
(72) Inventor: Montserrat Carbonell, Marc, 08201 Mataro (ES); Ruiz Casadao, Oscar, 08038 Barcelona (ES)
(74) Representative: Ponti Sales, Adelaida

(57) **Abstract**

It includes at least one measuring device (1) of the traction force, and it is characterised in that it includes control means (2,3) that include a device for conditioning (2) the recorded signal from the measuring device (1), and a data management and processing device (3) which, based on specific software, makes a comparison between the recorded signal and some preset comparison parameters, which include various ranges of comparison of force values programmed in function of each moment of the cycle and speed of the press, with each range being linked to different actions, devices and operations of the press.

## Description

This invention relates to a device for control of the traction force exercised upon a sheet conveyor device of a press for working laminar materials.

Said presses work laminar materials such as paper, compact or corrugated cardboard, plastic, etc., which can be cut, split, embossed, stamped, etc.

### BACKGROUND OF THE INVENTION

Known in the art are machines for working laminar materials, and more specifically presses provided with mechanisms and work stations, such as stations for feeding, recording, offcut ejection and reception of the worked materials, while they are also provided with sheet conveyor devices that permit movement and positioning of said sheets through the different work stations at which the various operations are to be carried out.

The sheet conveyor device comprises bars of sheet conveyor clamps attached to endless chains, which are in their turn drawn by chainwheels mounted on a main shaft, which is in turn coupled to some traction means.

The traction means are often provided with a clutch mechanism or the like, which in the event of accident or collision of said conveyor bars allows them to be disconnected from their traction system, while they are also in turn provided with means that detect said declutching action and halt the press.

When such declutching occurs, and once the reason for the collision has been corrected, said clutch must be reset back to the starting position again.

Said devices have the disadvantage that most such clutches are of the fixed-force type, being tared to an actuation force rather greater than the sum of the maximum force exercised by the traction means at maximum press speed and the force exercised at the moment of maximum chain-cycle traction torque.

If account is taken of the fact that the force exercised by the traction means is variable, for there are on the one hand the differences of forces existing within the sheet conveyor's own traction cycle, which passes from not exercising any force on said conveyor bars in the part of the cycle in which the sheet is at a standstill for working upon, up to a maximum cyclical force at the moment of maximum velocity and acceleration of said bars, all of this within each cycle, while on the other hand there is the force exercised on the traction of said transmission unit, which also varies in function of the hourly work-rate of the press and depending on the press model and characteristics, then it can easily be understood that the taring of the clutch carried out in accordance with the sum of said forces is not ideal, for under gentler collision impacts or minor breakages it will not be actuated.

If we further take into account that the means normally used in detecting the declutching action of said transmission, which act by stopping the press, are generally electromechanical and usually graduated in a such a way that they trigger an instant before the clutch jumps, then it can be easily understood that they are slow in actuation and, when the detector sends the press-stoppage order, the order arrives once a considerable stress has already arisen, one that is very much greater than the optimum and that combined with the inherent inertia of the press, when the press actually stops, often means that the accident or impact acquires the proportions of major breakages of press parts or mechanisms.

### DESCRIPTION OF THE INVENTION

The objective of the device of the present invention for control of the traction force exercised upon a sheet conveyor device of a press for working laminar materials is to solve the disadvantages presented by the devices known in the state of the art, while providing a number of advantages that will be described below.

The device for control of the traction force exercised upon a sheet conveyor device of a press for working laminar materials of the present invention is of the type that include at least one measuring device of the traction force, and is characterised in that it includes control means that include a device for conditioning the recorded signal from the measuring device, and a data management and processing device which, based on specific software, makes a comparison between the recorded signal and some preset comparison parameters, which include various ranges of comparison of force values programmed in function of each moment of the cycle and speed of the press, with each range being linked to different actions, devices and operations of the press.

The device of the invention is thus capable of detecting and acting instantaneously in the face of ad hoc excess forces that arise in the traction means of the sheet conveyor device, by measuring it and comparing it with the force that the manufacturer states as correct for normal working. Said measurement and comparison are carried out over the entire cycle and the entire range of press speeds, implementing where applicable an instantaneous actuation order.

If it is borne in mind that in the state of the art the main problems in stopping the press instantaneously lie in the stress parameter used, the detection and actuation time and the inertia of the press, it can easily be understood that the chief advantage of the present invention is the rapid and precise actuation and detection of the anomaly and the speedy actuation on press stoppage or other actions, so that there is no damage to the press or the damage is minor in scope.

Advantageously, if at any moment in the press cycle the traction force value differs from the values programmed for that particular moment, in any of the various comparison ranges, the control means act instantaneously and automatically on the devices linked to each one of the ranges with a value different from that recorded.

Preferably, one of the comparison ranges acts on press driving means in order to implement stoppage of the press. Preferably, the driving means comprise a motor.

Also preferably, one of the comparison ranges acts upon a tensioner device that controls the tension force of some conveyor chains.

Also preferably, at least one of the comparison ranges acts upon some acoustic and/or light warning devices.

The action of the aforesaid comparison ranges is implemented independently of one another and is unrelated with the action of other safety elements, such as a safety clutch.

Advantageously, the actions on the devices linked to each of the comparison ranges can be adjusted or overridden individually either temporarily or constantly.

Preferably, the recorded signal conditioning device is a signal amplifier.

Preferably, the at least one measuring device of the traction force can be chosen from extensometers, load cells and accelerometers.

Preferably, the data management and processing device is a personal computer or a PLC.

In accordance with one aspect of the invention, the sheet conveyor device includes some traction wheels acting on endless chains with conveyor bars provided with clamps for securing the sheets to be conveyed.

Preferably, the driving wheels of the endless chains are mounted on a main shaft driven by some traction means.

Advantageously, the sheet conveyor device includes a safety clutch. The device of the invention is perfectly compatible with known clutch systems of all types, and works independently, said clutch not being necessarily replaceable or overridable, all this in accordance with the criterion of the press manufacturer.

Also advantageously, the at least one measuring device is positioned at a point sensitive to the stresses imparted by the traction means during the cycle pertaining to movement of the conveyor bars.

### BRIEF DESCRIPTION OF THE DRAWINGS

In order to facilitate the description of the matters set out above some drawings are attached that show, schematically and solely by way of non-restrictive example, a practical case of embodiment of the device for control of the traction force exercised upon a sheet conveyor device of a press for working laminar materials of the invention, in which:
Figure 1 is a schematic diagram of the elements that comprise the device of the invention; and
Figure 2 is a section view of the sheet conveyor device, showing the location of the at least one sensor of the traction force.

### DESCRIPTION OF A PREFERRED EMBODIMENT

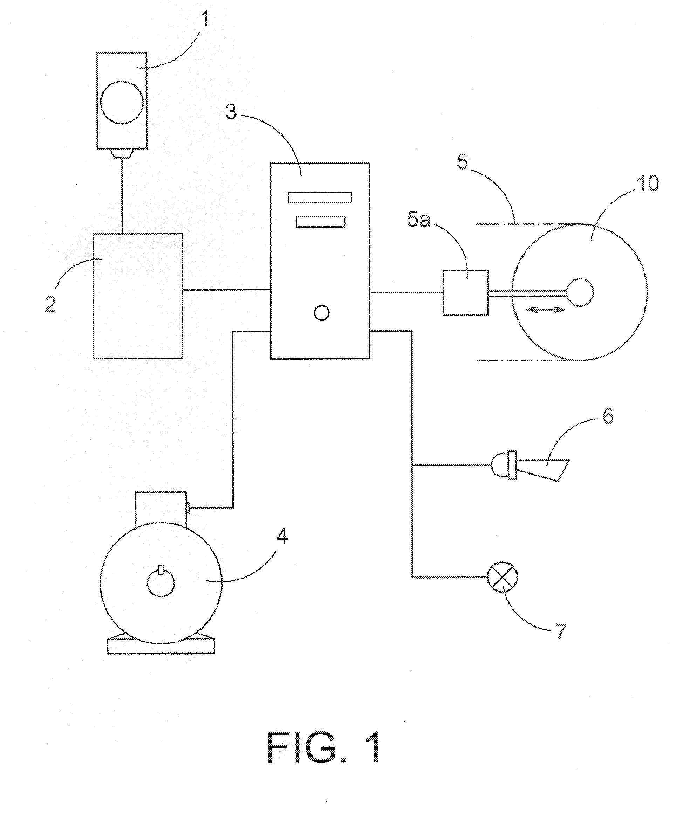

As can be seen from Figure 1, the device for control of the traction force exercised upon a sheet conveyor device of a press for working laminar materials includes at least one sensor 1, such as an extensometer, a load cell, an accelerometer or the like, that measures the traction force exercised; an amplifier 2 that picks up and conditions the signal emitted by the at least one sensor 1 and amplifies it to make it controllable; and a PC or PLC 3 (normally the one fitted to the machine) that picks up the signal from the amplifier 2 and that, by means of an individualised program, compares the signal with some preset comparison values and issues some programmed orders.

Said PC or PLC 3, depending on the results of the comparison, will be able to act upon the various elements of the press, stopping, declutching and/or braking a main motor 4 of the press, tensioning or slackening some endless conveyor chains 5, producing acoustic warnings 6 and/or light warnings 7, acting upon other elements, etc., as will be described below.

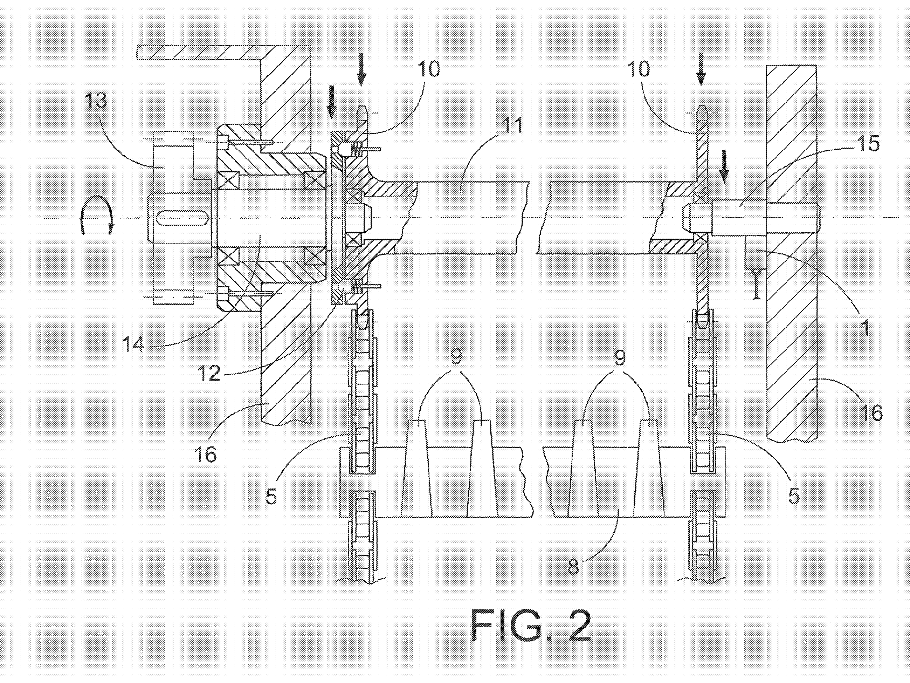

With reference to Figure 2, the sheet conveyor device includes some sheet-conveyor clamp 9 bars 8 attached to the endless chains 5, which are in turn driven by chainwheels 10 mounted on a main shaft 11, which in turn, by means of a clutch 12, is driven by some traction means.

Said traction means include among other elements (not shown) a cogwheel 13 that receives traction that is variable in speed in function of the hourly work rate and, at the same time, a change of acceleration and deceleration of the movement within each cycle.

The two chainwheels 10 are attached to the main shaft 11 and are mounted respectively on each end thereof, with one of said chainwheels 10 being coupled to the clutch 12.

Said main shaft 11 rests at one end on a fixed shaft 15 and is coupled at the other end to the transmission shaft 14. Said fixed shaft 15 and transmission shaft 14 are attached respectively to some fixed supports 16.

The at least one sensor 1 has to be positioned at a point sensitive to the stresses imparted by the traction means during the cycle pertaining to the movement of the conveyor bars 8.

Depending on the design of said mechanisms and their support points, said at least one sensor 1 can be located on a static part of the shaft 15 and/or support on which rest the wheels 10 that drive the endless chains 5 carrying the conveyor bars 8, so that during said conveying action the force delivered, which varies in function of the speed and moment in the cycle, produces a deformation measurable by the at least one sensor 1.

Similarly, the arrows show the points at which the forces imposed by the traction give rise to stress and potential deformation, which instantly permits said measurement by means of the at least one sensor 1, as well as comparison and issuing of orders to the press by means of the PC or PLC 3 and the comparative program.

The functioning of the device of the invention is described below:
Firstly, the at least one sensor 1 sends the amplifier 2 the recorded signal pertaining to the traction force exercised on the transport device. The amplifier 2 amplifies and modulates said signal so that when the PC or PLC 3 receives it a program is used to compare the real force value obtained by the at least one sensor 1 with the values programmed by the manufacturer for each comparative range desired, so that if the real value obtained at each moment of the cycle is different from the established values in one or several comparison ranges, there occurs the measure that corresponds to the actions connected to those comparison ranges.

Each comparison range will be programmed in function of the action to be implemented, such that the programmed action value of each one of them can be either above, below or equal to a value deemed to be optimum, in addition to being able to program within each range a margin of tolerance around that value.

Said comparison ranges will act principally upon the following parameters: press stoppage through its own driving means, in this example by means of the motor 4; regulation of force on the tensioner 5a of the chains 5 or the conveyor means; the operation of acoustic 6 and/or light 7 warning devices of the various actions, etc. All of these are independent of one another and unconnected with the action of other safety elements, such as a safety clutch 12.

## Claims

1. Device for control of the traction force exercised upon a sheet conveyor device of a press for working laminar materials, which includes at least one measuring device (1) of the traction force, **characterised in that** it includes control means (2,3) that include a device for conditioning (2) the recorded signal from the measuring device (1), and a data management and processing device (3) which, based on specific software, makes a comparison between the recorded signal and some preset comparison parameters, which include various ranges of comparison of force values programmed in function of each moment of the cycle and speed of the press, with each range being linked to different actions, devices and operations of the press.

2. Device, according to Claim 1, **characterised in that** if at any moment of the press cycle the traction force differs from the values programmed for that particular moment, in any of the various comparison ranges, the control means act instantaneously and automatically on the devices linked to each one of the ranges with a value different from that recorded.

3. Device, according to any of the preceding claims, **characterised in that** one of the comparison ranges acts on press driving means (4) in order to implement stoppage of the press.

4. Device, according to Claim 3, **characterised in that** the driving means comprise a motor (4).

5. Device, according to any of the preceding claims, **characterised in that** one of the comparison ranges acts upon a tensioner device (5a) that controls the tension force of some conveyor chains (5).

6. Device, according to any of the preceding claims, **characterised in that** at least one of the comparison ranges acts upon some acoustic (6) and/or light (7) warning devices.

7. Device, according to any of the preceding claims, **characterised in that** the actions on the devices linked to each of the comparison ranges can be adjusted or overridden individually, either temporarily or constantly.

8. Device, according to Claim 1, **characterised in that** the recorded signal conditioning device (2) is a signal amplifier.

9. Device, according to Claim 1, **characterised in that** the at least one measuring device (1) of the traction force can be chosen from extensometers, load cells and accelerometers.

10. Device, according to Claim 1, **characterised in that** the data management and processing device (3) is a personal computer.

11. Device, according to Claim 1, **characterised in that** the data management and processing device (3) is a PLC.

12. Device, according to Claim 1, **characterised in that** the sheet conveyor device includes some traction wheels (10) acting on endless chains (5) with conveyor bars (8) provided with clamps (9) for securing the sheets to be conveyed.

13. Device, according to Claim 12, **characterised in that** the driving wheels (10) of the endless chains (5) are mounted on a main shaft (11) driven by some traction means.

14. Device, according to any of the preceding claims, **characterised in that** the sheet conveyor device includes a safety clutch (12).

15. Device, according to any of the preceding claims, **characterised in that** the at least one measuring device (1) is positioned at a point sensitive to the stresses imparted by the traction means during the cycle pertaining to the movement of the conveyor bars (8).
